# EUROPEAN PATENT APPLICATION

(11) **EP 2 078 557 A1**
(43) Date of publication of application: **15.07.2009**
(21) Application number: 08169655.1
(22) Date of filing: 21.11.2008
(51) Int. Cl.: B01F 3/04, B01F 5/10, A23C 9/13, A23C 9/152, A23L 2/54

(54) **Apparatus and method for the dissolving and/or mixing of gas in fluid**

(30) Priority: 14.01.2008 NO 20080250
(71) Applicant: Yara International ASA, 0202 Oslo (NO)
(72) Inventor: Emilsen, Morten, 0973 Oslo (NO); Reines, Arnfinn, 3930, Porsgrunn (NO); Bekken, Svein, 3721 Skien (NO)
(74) Representative: Onsagers Ltd

(57) **Abstract**

An apparatus for dissolving and/or mixing of gas in a fluid flow and possibly for reactions to take place. The apparatus comprises a dissolution unit (1) provided with at least one passage for the entrance (5,8) and discharge (11) of the flow into and out of the dissolution unit and circulation means (10). The dissolution unit is arranged for the flow to circulate in a looped shaped manner.

## Description

The invention concerns an apparatus for dissolving and/or mixing of gas in fluid and possibly also for reactions to take place when necessary.

Various apparatuses and methods for dissolving and/or mixing between fluid flows are known in the art.

EP 0030517 shows an apparatus comprising a column to which a flow line is connected. Gas is introduced to the flow line and fed under pressure to the column. The object of the process is to produce butter from raw milk by using cracking.

GB 1317537 discloses a process to obtain foaming by dissolving gas in milk.

The above mentioned publications concern processes and arrangements of the apparatus which are different from the process of the invention.

The object of the invention is to provide an apparatus that improve dissolving/mixing of gas in fluid and possibly also provide conditions for necessay reactions to take place.

The object of the invention is obtained by an apparatus and a method as defined in the independent claims. Further embodiments of the invention are defined in the following dependent claims.

In accordance with the independent claim 1, an apparatus for dissolving and/or mixing of gas in fluid and in some circumstances for necessary reactions to occur as a result of introducing gas into the fluid, comprise a dissolution unit provided with at least one passage for the entrance and discharge of the flow into and out of the dissolution unit. The apparatus is further provided with circulation means. The dissolution unit is arranged for the flow to circulate in a looped shaped manner. In one embodiment a flow path shaped as a circulation loop is provided for the flow to be circulated in a looped shaped manner. By this arrangement, the apparatus is adapted to treat the gas in the fluid in a gentle and efficient manner. The fluid/gas mix is given a long retention time circulating in the loop arrangement, for the dissolution of gas in the fluid to occur and the possible reactions to take place. The apparatus in accordance with the invention may also be useful when the volume of the fluid/gas to be treated is relatively small. In that case the volume of the flow of the dissolution unit is larger than the volume of the flow to be discharged or fed into the dissolution unit. A major advantage of the invention is the possibility to have large variations in the flow of gas saturated fluid out of the dissolver unit.

The fluid to be mixed/dissolved with gas in the apparatus may comprise gas or liquid or a mixture of both. Thus, gas may be mixed/dissolved in liquid in the dissolution unit or two or more gases may be mixed/dissolved when circulating in the dissolution unit.

The apparatus may comprise a fluid flow path for the flow of fluid into the dissolution unit. The capacity of the flow to circulate in the dissolution unit is preferably larger than the capacity of the flow into and out of the dissolution unit. The apparatus may further comprise a discharging flow path for discharging the flow from the dissolution unit. The apparatus may then be provided with a passage or point of connection such as an inlet for the entrance of flow into the dissolution unit. Further the apparatus may be provided with a passage or point of connection such as an outlet for the discharge of flow out of the dissolution unit. And the apparatus may be provided with a passage or inlet for introduction of gas into the dissolution unit.

The circulation means to be provided in the apparatus may be arranged in the flow path of dissolution unit and/or in the fluid flow path. The circulation means may be constituted by at least one pump, which causes or contributes to the flow in the apparatus. In the case wherein the fluid to be mixed/dissolved with gas in the apparatus is liquid of a kind to be treated in a gentle manner to avoid damages on the product to be produced, the pump may be of a kind capable of providing flow using low pressure difference and/or low mechanical impact. The long retention time of the flow in the dissolution unit then provides for the sufficient dissolution of gas in fluid and the necessary reactions to take place. If the fluid to be to be mixed/dissolved with gas in the dissolution unit is a gas, the circulation means may be constituted by a fan or a compressor or other suitable means to make the gas circulate in the dissolution unit.

In the case wherein the circulation means comprise a pump and the fluid to be to be mixed/dissolved with gas in the apparatus is liquid, the pump may have the additional function of reducing the size of the bubbles caused by the gas introduced upstream the pump.

The inner space of at least one elongated member such as a pipe line, pipe, pipe section making up a pipe arrangement, tube etc may be selected to provide the flow paths of the dissolution unit, the fluid flow path or the discharging flow path.

In the following an example of the invention will be described with reference to the attached drawing wherein:

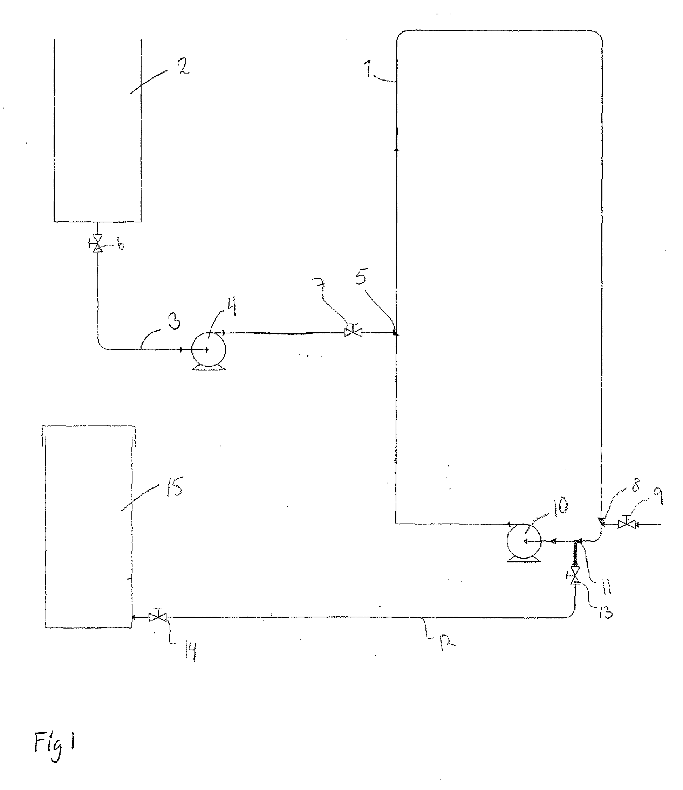

Fig 1 shows an embodiment of the invention:

An apparatus for dissolving/mixing gas in fluid and in some circumstances for possible reactions to occur as a result of introducing gas into the fluid, is shown in fig 1. The shown apparatus is suitable for dissolving/mixing gas in liquid, but may also be applicable for mixing two gases, the term fluid is therefore used in the following when describing the apparatus shown in fig 1. A dissolution unit 1 is provided as a flow line arranged in a loop. Fluid is transferred from fluid storage 2 to the dissolution unit 1 through a fluid flow line 3. The flow of the fluid flow line 3 is directed through a pump 5 for the regulation of the flow characteristics/parameters such as for instance the volume flow before entering the dissolution unit 1 at passage inlet 5. Other components for the control of the flow may replace or be added to the pump 5 in the shown set up. Valves 6, 7 are provided for closing or opening and controlling the flow of fluid into the fluid flow line 3 and into the dissolution unit 1 respectively.

Gas is supplied to the dissolution unit 1 at passage inlet 8, wherein the flow of gas into the dissolution unit 1 is controlled and regulated by a valve 9. The gas is introduced into the flow of the dissolution unit 1 upstream a pump 10. The flow of the dissolution unit 1 circulates through the pump 10 and the pump controls and regulates the characteristics/parameters such as for instance the volume flow. When the fluid is a liquid, bubbles occur in the flow when introducing gas into the flow. To obtain dissolution of the gas in the fluid, the size of the bubbles need to be reduced. The pump 10 is able to break down the bubbles, and by introducing the gas upstream the pump 10, the circulation of flow through the pump 10 causes the reduction of the size of the bubbles and provides for introducing the gas upstream the pump 10. If the fluid is a gas, the introduction of the other gas to be mixed into the fluid (the main bulk gas) should be done immediately downstream the pump(fan/compressor) to ensure good mixing prior to the outlet 11.

By this arrangement of the dissolution unit 1 the flow may be circulated in the loop for a set time as required by the operator. The circulation of the flow in the dissolution unit thereby provides for a retention time sufficient for the dissolution of gas in fluid and for reactions between substances to take place. The outlet flow through 12 may be discontinuous and/or variable.

If the fluid to be circulated in the dissolution unit needs a gentle treatment, it is possible to circulate the fluid for a longer time in the dissolution unit 1 thus increasing the retention time in order to obtain the required dissolving, mixing and/or reactions to occur. In these cases the pressure differences present in the dissolution unit will be low and the velocity of the flow will also be low. To provide for these conditions in the loop of the dissolution unit 1, the pump 10 may be constituted by a circulation pump, wherein the pump 10 also may be capable of breaking the bubbles of the flow circulating through the pump to reduce the size of the bubbles in the flow, in the case wherein a liquid is circulating in the dissolution unit.

If necessary it is also possible to introduce additional restriction means for varying the pressure in the flow of the dissolution unit 1. For instance, by arranging a choking device upstream the pump 10, thereby obtaining a higher pressure level upstream the pump and downstream the choking device. Alternatively, a choking device may be introduced downstream the pump 10 to produce a higher pressure in the loop of the dissolution unit 1.

The dissolution unit 1 may be provided by one or more static mixer, for instance two static mixers, but this arrangement is in most cases not mandatory to obtain the sufficient dissolution of gas in the fluid.

The flow of the dissolution unit 1 is discharged through a passage outlet 11 and through a discharging flow line 12 to further storage 15. Valve 13 is provided for discharging flow from the dissolution unit 1 into the discharging flow line 12. Valve 14 is provided for allowing the flow from the discharging flow line 12 into the further storage 15 or e.g. to an existing process pipeline. The outlet 11 is positioned in the lower part of the dissolution unit 1. By this location of the outlet 11, the flow is calmed and the major part of the gas bubbles remains in the dissolution unit, before being led into the discharging flow line 12, when the fluid to be mixed/dissolved with gas in the apparatus is liquid.

The capacity of flow in the dissolution unit 1 is typically 3-5 times larger than the flow let into and out of the dissolution unit 1. The capacity of dissolution unit 1 makes it possible to vary the flow into and out of the dissolution unit 1, leaving the flow of the dissolution unit 1 close to being constant.

The dissolution unit 1 may be implemented in various ways to arrange for the flow to circulate in a looped shaped manner. Preferably the dissolution unit 1 comprises a flow path forming a circulation loop for the fluid/gas mix to flow. The flow path may be provided in the inner space/hollow of at least one pipe. The pipe may comprise a pipe arrangement comprising tube parts and/or pipe sections fitted together to make up a looped shape circuit. The fluid flow line 3 and the discharging flow line 12 may also comprise flow paths for the flow of fluid and fluid/gas mix into and out of the dissolution unit 1. The flow paths of the fluid flow line 3 and the discharging flow line 12 may also be provided in the inner space hollow of at least one pipe. Further the pipe may comprise a pipe arrangement comprising tube parts and/or pipe sections making up the fluid flow line 3 and the discharging flow line 12. The pipe or the various tube parts or pipe sections may have different shapes and rigidities and may be provided by different kind of materials.

The dissolution unit 1 is suitable for the mixing of different kinds of fluid and gas. For instance the dissolution unit 1 may be used for the dissolving of carbon dioxide in water. It may also be used for dissolving oxygen in water. A further field of use is adding carbon dioxide to milk to change the pH of the milk for the production of dairy products. When dissolving carbon dioxide in milk it is of vital importance to perform the mixing in a gentle manner to avoid breaking the fat membrane of the milk molecules.

## Claims

1. An apparatus for dissolving and/or mixing of gas in a fluid flow and possibly for reactions to take place, the apparatus comprises a dissolution unit provided with at least one passage for the entrance and discharge of the flow into and out of the dissolution unit and circulation means,
**characterized in that** the dissolution unit is arranged for the flow to circulate in a looped shaped manner.

2. An apparatus in accordance with claim 1,
**characterized in that** the dissolution unit comprises a flow path forming a circulation loop.

3. An apparatus in accordance with one of the proceeding claims,
**characterized in that** the apparatus comprises a fluid flow path for the flow of fluid into the dissolution unit.

4. An apparatus in accordance with one of the proceeding claims,
**characterized in that** the apparatus comprises a discharging flow path for discharging the flow from the dissolution unit

5. An apparatus in accordance with one of the proceeding claims 1-4,
**characterized in that** the inner space of at least one elongated member such as a pipe line, pipe, pipe section making up a pipe arrangement, tube etc provide the various flow paths.

6. An apparatus in accordance with the proceeding claim,
**characterized in that** gas is introduced upstream the circulation means.

7. An apparatus in accordance with one of the proceeding claims,
**characterized in that** the circulation means comprises at least one pump.

8. An apparatus in accordance with one of the proceeding claims,
**characterized in that** circulation means is arranged to provide for the reduction of the size of the bubbles in the flow.

9. An apparatus in accordance with one of the proceeding claims,
**characterized in that** the apparatus is provided with a passage for the entrance of flow into the dissolution unit, and/or with a passage for the discharge of flow out of the dissolution unit, and/or with a passage for entrance of gas into the dissolution unit.

10. An apparatus in accordance with one of the proceeding claims,
**characterized in that** the capacity of the flow of the dissolution unit is larger than the capacity of the flow into and out of the dissolution unit.
